# EUROPEAN PATENT APPLICATION

(11) **EP 2 006 718 A2**
(43) Date of publication of application: **24.12.2008**
(21) Application number: 07741642.8
(22) Date of filing: 13.04.2007
(51) Int. Cl.: G02B 6/255

(54) **FUSION SPLICE MACHINE**

(30) Priority: 13.04.2006 JP 2006110454
(71) Applicant: Sumitomo Electric Industries, Ltd., Osaka-shi, Osaka 541-0041 (JP)
(72) Inventor: MIYAMORI, Makoto, Yokohama-shi, Kanagawa 244-8588 (JP); HATTORI, Kazunari, Yokohama-shi, Kanagawa 244-8588 (JP); IKEJIMA, Osamu, Yokohama-shi, Kanagawa 244-8588 (JP)
(74) Representative: HOFFMANN EITLE
(86) International application number: PCT/JP2007/058206
(87) International publication number: WO 2007/119835

(57) **Abstract**

A fusion splicer that can execute fusion splice and reinforcement preparations of optical fibers to be next subjected to reinforcement treatment efficiently at a proper timing by keeping track of the reinforcement treatment progress state to perform fusion splice and reinforcement treatment in parallel with each other is provided.

A fusion splicer includes a fusion splicing device for butting optical fiber end parts against each other and fusing them and a reinforcement treatment device for reinforcing the optical fibers subjected to the fusion splice with a reinforcement sleeve covered thereon, and a display for monitoring the state of fusion splice comprises a display function of displaying the progress state of reinforcement treatment. The reinforcement treatment progress state is displayed as temperature rise, heat insulation, cooling information or is displayed as time information or temperature information. If the fusion splicer includes a plurality of reinforcement treatment devices that can be controlled independently, the progress state of each reinforcement treatment device is displayed.

## Description

### Technical Field

This invention relates to a fusion splicer including a reinforcement treatment device for reinforcing a fusion splice part with a reinforcement sleeve after executing fusion splice of optical fibers by a fusion splicing device.

### Background Art

Fusion splice of optical fibers is executed by removing the fiber coatings of splice ends of the optical fibers and heating and fusing the butt end parts of bare fiber parts of exposed glass. Each bare fiber portion subjected to the fusion splice with the fiber coating removed has weak mechanical strength and thus needs to be protected by a reinforcement member. The reinforcement member usually is formed by adding a tensile strength body (also called a reinforcement rod) in a heat-shrinkable tube shrunk radially by heating and storing a hot-melt adhesive resin material (for example, refer to patent document 1).

In general fusion splice, for example, assuming that the time taken for fusion splice work is 10 to 20 seconds, the time required for reinforcement work is 30 to 135 seconds. Thus, even if the splice work is performed rapidly, if preparations for performing the next reinforcement treatment are delayed or much time is taken for the reinforcement treatment, the total work efficiency cannot be enhanced. Thus, patent document 1 discloses an art of placing an air blower below an electric heater, plate of a reinforcement treatment device, providing a temperature sensor, executing forced cooling by the air blower after the termination of the reinforcement treatment, and making a notification of the termination of the reinforcement treatment using the temperature sensor for shortening the time of one cycle.
Patent document 1: Japanese Patent Unexamined Publication No. 6-201938

### Disclosure of the Invention

### Problems to be Solved by the Invention

However, if the time required for the reinforcement treatment is shortened, it cannot be made shorter than the fusion splice work. Each optical fiber in an unreinforced state just after the termination of the fusion splice has weak strength because the bare fiber of glass is exposed; in the situation in which a plurality of optical fibers waiting for being reinforced are accumulated, there is a fear of causing a problem of break, damage, etc., to occur as an external force is added to the fusion splice part. Thus, it is possible to shorten the wait time before completion of the reinforcement treatment by preparing a plurality of reinforcement treatment devices for one fusion splicing device. To efficiently conduct transport from a fusion splicing device to a reinforcement treatment device, a fusion splicer including both a fusion splicing device and a reinforcement treatment device side by side is also considered.

If the time to transition to another reinforcement treatment by detecting the termination of one reinforcement treatment can be shortened as disclosed in patent document 1, the progress state of the reinforcement treatment cannot be known. Thus, what timing fusion splice work is to be performed at cannot be determined and the fusion splice work is advanced consecutively regardless of the progress state of the reinforcement treatment or is executed each time the termination of the reinforcement treatment is detected. The former results in accumulation of a large number of optical fibers waiting for being reinforced and the latter results in an increase in the total work time. If a plurality of reinforcement treatment devices are included, a similar result occurs unless the progress state of each reinforcement treatment device can be known individually; it is difficult to set efficient work allocation.

The invention is embodied considering the realities described above and it is an object of the invention to provide a fusion splicer that can execute fusion splice and reinforcement preparations of optical fibers to be next subjected to reinforcement treatment efficiently at a proper timing by keeping track of the reinforcement treatment progress state to perform fusion splice and reinforcement treatment in parallel with each other.

### Means for Solving the Problems

A fusion splicer according to the invention is a fusion splicer including a fusion splicing device for butting optical fiber end parts against each other and fusing them and a reinforcement treatment device for reinforcing the optical fibers subjected to the fusion splice with a reinforcement sleeve covered thereon, wherein a display for monitoring the state of fusion splice comprises a display function of displaying the progress state of reinforcement treatment. The reinforcement treatment progress state is displayed as temperature rise, heat insulation, cooling information or is displayed as time information or temperature information. If the fusion splicer includes a plurality of reinforcement treatment devices that can be controlled independently, the progress state of each reinforcement treatment device is displayed. Advantages of the Invention

According to the invention, it is made possible to keep track of the progress state of the current reinforcement treatment being executed in real time on the display for monitoring the state of fusion splice, so that fusion splice and preparations for reinforcement treatment of the optical fibers to be next subjected to reinforcement treatment can be executed at good timing. Consequently, the optical fibers whose fusion splice is complete can be transported efficiently from the fusion splicing device to the reinforcement treatment device without standby. If standby occurs, reinforcement treatment can be executed in sequence efficiently in an appropriate standby time without accumulating a large number of optical fibers for waiting. To include a plurality of reinforcement treatment devices that can be operated independently of each other, the reinforcement treatment device that can be next used can be determined and the wait time, etc. , becomes obvious, so that preparation work can be conducted efficiently, it is made possible to set non-wasteful work allocation as a whole, and the workability can be enhanced.

### Brief Description of the Drawings

FIG. 1 is an external view to describe an outline of a fusion splicer incorporating the invention.
FIG. 2 is a block diagram to describe an outline of the fusion splicer incorporating the invention.
FIG. 3 is a drawing to show display examples of displaying the reinforcement treatment progress state according to the invention.
FIG. 4 is a drawing to show other display examples of displaying the reinforcement treatment progress state according to the invention.

### Description of Reference Numerals

- 1: Optical fiber
- 2: Bare fiber
- 3: Fiber coating
- 4: Fusion part
- 5: Reinforcement sleeve
- 6: Adhesive resin material
- 10: Fusion splicer
- 11: Fusion splicing device
- 12: Reinforcement treatment device
- 13: Display
- 14: Fusion mechanism
- 15: Observation mechanism
- 16: Heating mechanism
- 17: Temperature detection mechanism
- 18: Control section
- 19: Power supply section
- 20: Memory
- 21: Main screen
- 22a, 22b-25a, 25b: Display example

### Best Mode for Carrying out the Invention

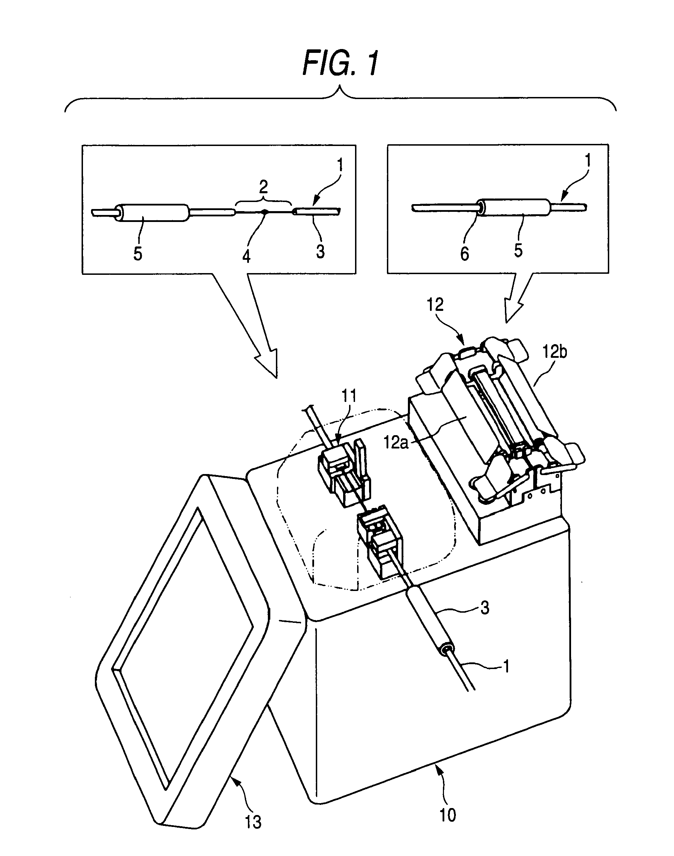

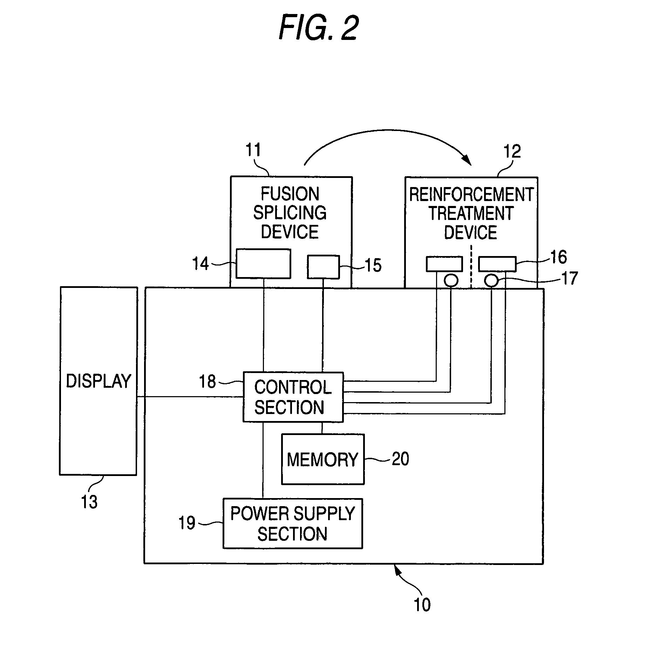

An embodiment of the invention will be discussed based on the accompanying drawings. FIG. 1 is an external view to describe an outline of a fusion splicer incorporating the invention and FIG. 2 is a block diagram to describe an outline of the fusion splicer. In the figures, numeral 1 denotes an optical fiber, numeral 2 denotes bare fibers, numeral 3 denotes a fiber coating, numeral 4 denotes a fusion part, numeral 5 denotes a reinforcement sleeve, numeral 6 denotes an adhesive resin material, numeral 10 denotes a fusion splicer, numeral 11 denotes a fusion splicing device, numeral 12 denotes a reinforcement treatment device, numeral 13 denotes a display, numeral 14 denotes a fusion mechanism, numeral 15 denotes an observation mechanism, numeral 16 denotes a heating mechanism, numeral 17 denotes a temperature detection mechanism, numeral 18 denotes a control section, numeral 19 denotes a power supply section, and numeral 20 denotes memory.

In the fusion splicer 10 according to the invention, the reinforcement treatment device 12 for performing reinforcement treatment of the fusion part of optical fibers is placed side by side with the fusion splicing device 11 for butting the connection ends of optical fibers against each other and performing fusion splice, and the display 13 for observing the state of the fusion splice portion of optical fibers is provided with a display function for displaying the progress state of reinforcement treatment described later. The fusion splicing device 11 is shown in the figure as an example of fusing single-core optical fibers, but a device of a configuration capable of collectively fusing multicore optical fibers can also be used. For a pair of optical fibers 1 mutually subjected to fusion splice, the fiber coatings 3 of the splice ends are removed for exposing the bare fibers, 2 of glass, and either of the optical fibers 1 is previously inserted into the reinforcement sleeve 5.

A pair of optical fibers 1 is set in the fusion splicing device 11 so that the end parts are butted against each other, and is clamped and then core aligning at the butt position is performed. This state can be monitored and checked on the display 13. Upon completion of the fusion splice, the previously inserted reinforcement sleeve 5 is moved for covering the fusion part 4 and the exposed bare fibers 2 of glass on the periphery of the fusion part. Next, the optical fibers just after fused are moved to the reinforcement treatment device 12 and reinforcement treatment is performed. FIG. 1 shows an example of including two reinforcement treatment devices 12a. and 12b, but the number of the reinforcement treatment devices may be one.

The reinforcement sleeve 5 is formed of a heat-shrinkable tube and the heat-fused adhesive resin material 6 is entered in the reinforcement sleeve. The reinforcement sleeve 5 is heated for a predetermined time by the reinforcement treatment device 12, whereby it is shrunk, and the internal adhesive resin material 6 is heated and fused, fills the space in the reinforcement sleeve 5, and covers the optical fiber fusion part 4 and the bare fibers 2 on the periphery of the fusion part for increasing the mechanical strength. While the reinforcement treatment is performed, the next optical fiber fusion splice is performed and preparations for the next reinforcement treatment are made.

Further, an outline of the invention will be discussed with FIG. 2. The fusion splicer 10 includes the control section 18 for controlling the fusion splicing device 11 and the reinforcement treatment device 12, detecting their state, and displaying the state on the display 13 and the power supply section 19. It also includes the memory 20 for retaining management data for storing and setting control patterns for fusion splice and reinforcement treatment and the like.

The fusion splicing device 11 has the fusion mechanism 14 including core alignment and discharge means and the observation mechanism 15 for taking in the fusion state as an image, and setting and control are performed based on the management data managed in the control section 18 and the memory 20. The image data acquired by the observation mechanism 15 is subjected to image processing in the control section 18 and is displayed on the display 13. The reinforcement treatment device 12 has the heating mechanism 16 for storing the reinforcement sleeve 5 and heating it and the temperature detection mechanism 17 for detecting the heating state, etc. The heating treatment of the heating mechanism 16 is executed according to a predetermined pattern set and controlled by the control section 18 and the memory 20, and the progress state, time, temperature, etc., is managed or input in the control section 18 and is displayed on the display 13.

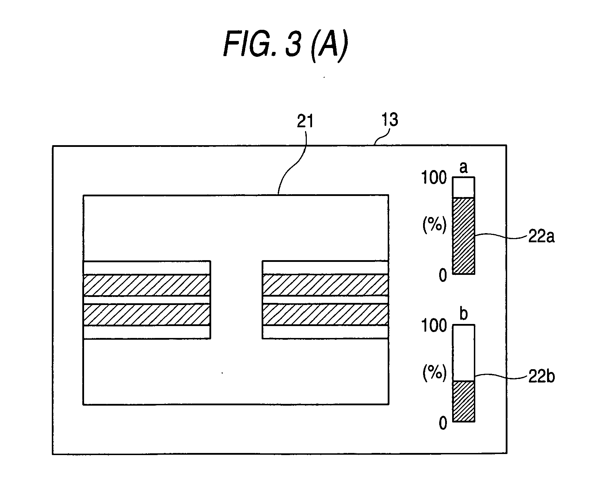

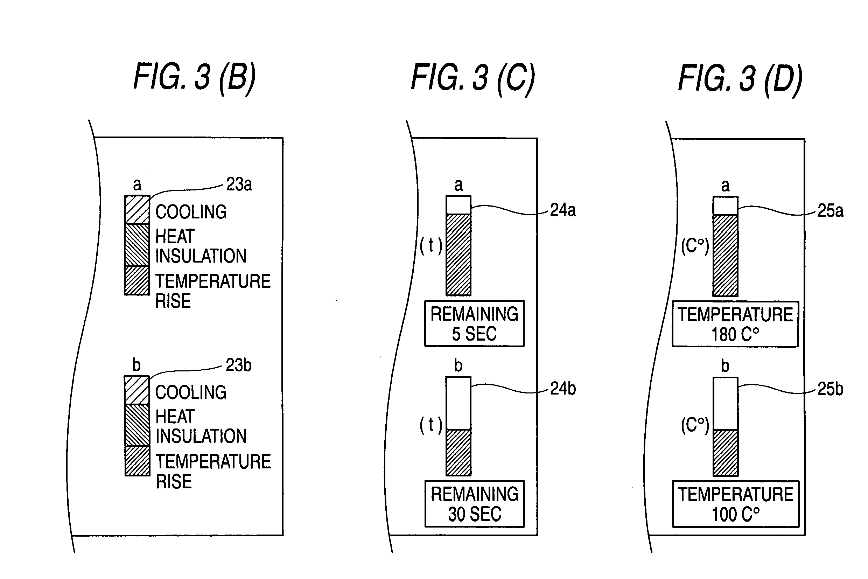

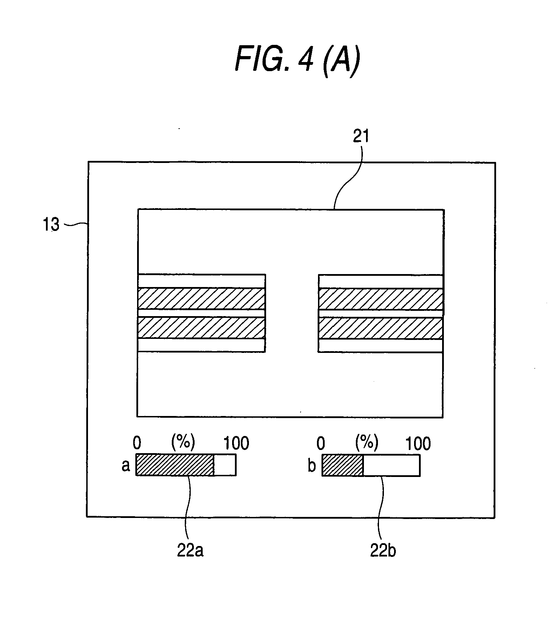

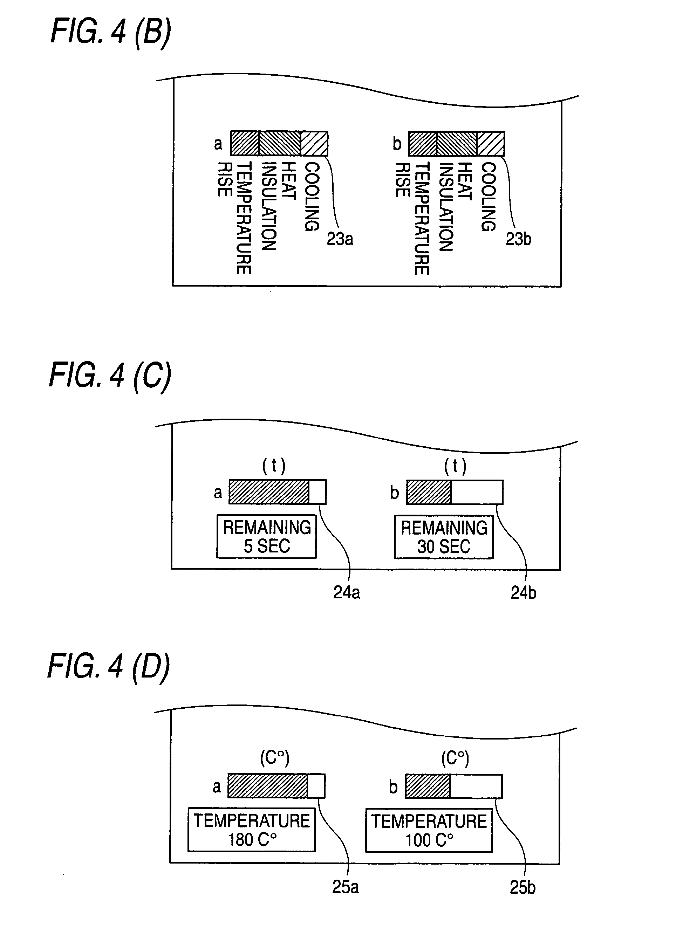

FIGS. 3 and 4 are drawings to describe examples of displaying the progress state of reinforcement treatment in the fusion splicer according to the invention; FIG. 3 shows an example of displaying at side positions of the display (in the figure, the right) and FIG. 3 shows an example of displaying at top and bottom positions of the display (in the figure, the bottom). A main screen 21 of the display 13 is used to monitor the core alignment or fusion state between optical fiber end parts. For example, bar display is produced using the left and right spaces of the main screen 21 (in the figure, the right). In the examples in the figures, two reinforcement treatment devices operated independently of each other are included and their respective reinforcement treatment progress states are displayed.

FIGS. 3 (A) and 4 (A) show display examples 22a and 22b of producing (%) display of the reinforcement treatment progress state; if the bar display becomes a full scale state (100%), it is assumed that the reinforcement treatment terminates, the optical fibers are taken out from the reinforcement treatment device, and the next optical fiber reinforcement treatment is started. As the reinforcement treatment progress state is kept track of according to the bar display, meanwhile preparations for performing reinforcement treatment from the next optical fiber fusion splice can be made at an appropriate timing and the next treatment can be handled rapidly without waste.

FIGS. 3 (B) and 4 (B) show display examples 23a and 23b of displaying the reinforcement treatment process progress state as the operation state of temperature rise, heat insulation, cooling, and each operation can be discriminated in a color. A mode in which the whole process of temperature rise -> heat insulation -> cooling is displayed continuously as a bar and the display is used in combination with the example in FIG. 3 (A) may be adopted. In this case, if the bar display becomes a full scale state in the last operation, cooling, it is assumed that the reinforcement treatment terminates, the optical fibers are taken out from the reinforcement treatment device, and the next optical fiber reinforcement treatment is started. In the example, both the reinforcement treatment progress state and operation state can be kept track of.

FIGS. 3 (C) and 4 (C) show display examples 24a and 24b of setting the reinforcement treatment process as the total time and displaying the progress degree as the time (or displaying the remaining time); if the bar display of the reinforcement treatment becomes a full scale state, it is assumed that the reinforcement treatment terminates, the optical fibers are taken out from the reinforcement treatment device, and the next optical fiber reinforcement treatment is started. Digital display may be produced in place of the analog display of the bar display or analog display and digital display may be used in combination as shown in the figure. In the example, an outline of the reinforcement treatment progress state can be kept track of in terms of time and while the remaining time is seen, allocation of any other work, etc., can be conducted as required.

FIGS. 3 (D) and 4 (D) show display examples 25a and 25b of setting the reinforcement treatment process as a temperature and displaying the temperature state; the operating temperature during the reinforcement treatment can be displayed. Also in this case, the operating temperature may be indicated as digital display in place of the analog display of the bar display or analog display and digital display may be used in combination as shown in the figure. In this case, if the bar display of the reinforcement treatment becomes a predetermined cooling temperature, it is assumed that the reinforcement treatment terminates, the optical fibers are taken out from the reinforcement treatment device, and the next optical fiber reinforcement treatment is started.

However, the whole progress state of the reinforcement treatment may be hard to see only from the display example 25a, 25b of the temperature during the reinforcement treatment. In this case, the display example may be used in combination with the display example 22a, 22b of (%) display in FIG. 3 (A) or 4 (A), for example. The display may be made different in analog display and digital display in such a manner that the (%) display is produced as analog display of bar display and the temperature is indicated as digital display or that the (%) display is produced as digital display and the temperature is indicated as analog display.

The display example 25a, 25b of the temperature and the display example 23a, 23b of the operation state of temperature rise, heat insulation, cooling are combined, whereby disturbance elements of the effect of outside air, etc., can be kept track of and settings of the heating temperature, etc., can also be made from the beginning. In addition, the display example 25a, 25b of the temperature and the display example 24a, 24b of time display may be combined or the display example 23a, 23b of displaying the operation state and the display example 24a, 24b of time display may be combined. Further, a display example of displaying the reinforcement treatment progress state on the side of the main screen in FIG. 3 and a display example of displaying the reinforcement treatment progress state on the top or the bottom of the main screen in FIG. 3 may be combined so that different displays are produced.

While the invention has been described in detail with reference to the specific embodiments, it will be obvious to those skilled in the art that various changes and modifications can be made without departing from the spirit and the scope of the invention. This application is based on Japanese Patent Application (No. 2006-110454) filed on April 13, 2006, which is incorporated herein by reference.

### Industrial Applicability

The display for monitoring the state of fusion splice work is provided with a function of displaying the progress state of the reinforcement treatment performed in parallel with the fusion splice work, whereby it is made possible to efficiently execute fusion splice and preparations for reinforcement treatment of the optical fibers to be next subjected to reinforcement treatment. Consequently, the optical fibers whose fusion splice is complete can be transported efficiently from the fusion splicing device to the reinforcement treatment device without standby. If standby occurs, reinforcement treatment can be executed in sequence efficiently in an appropriate standby time without accumulating a large number of optical fibers for waiting.

Particularly, to include a plurality of reinforcement treatment devices that can be operated independently of each other, the reinforcement treatment device that can be next used can be determined and the wait time, etc., becomes obvious, so that preparation work can be conducted efficiently, it is made possible to set non-wasteful work allocation as a whole, and the workability can be enhanced. The reinforcement treatment progress state can be easily displayed by adding hardware to an existing display, but can also be displayed using software. The reinforcement treatment progress state can be displayed using software with no change made to an existing fusion splicer main body or display.

## Claims

1. A fusion splicer comprising a fusion splicing device for butting optical fiber end parts against each other and fusing them and a reinforcement treatment device for reinforcing the optical fibers subjected to the fusion splice with a reinforcement sleeve covered thereon, **characterized in that**
a display for monitoring the state of fusion splice comprises a display function of displaying the progress state of reinforcement treatment.

2. The fusion splicer as claimed in claim 1 **characterized in that** the reinforcement treatment progress state is displayed as temperature rise, heat insulation, cooling information.

3. The fusion splicer as claimed in claim 1 **characterized in that** the reinforcement treatment progress state is displayed as time information.

4. The fusion splicer as claimed in claim 1 **characterized in that** the reinforcement treatment progress state is displayed as temperature information.

5. The fusion splicer as claimed in any one of claims 1 to 4 **characterized in that** it comprises a plurality of reinforcement treatment devices that can be controlled independently and the progress state of each reinforcement treatment device is displayed.
